# EUROPÄISCHE PATENTANMELDUNG

(11) **EP 1 443 678 A1**
(43) Veröffentlichungstag der Anmeldung: **04.08.2004**
(21) Anmeldenummer: 04405011.0
(22) Anmeldetag: 07.01.2004
(51) Int. Cl.: H04B 5/00

(54) **Vorrichtung zur induktiven Übertragung von elektrischen Signalen**

(30) Priorität: 03.02.2003 EP 03405050
(71) Anmelder: Sulzer Markets and Technology AG, 8401 Winterthur (CH)
(72) Erfinder: Moser, Urs, Dr., 8006 Zürich (CH)
(74) Vertreter: Sulzer Management AG

(57) **Zusammenfassung**

Eine Vorrichtung zur Übertragung von elektrischen Signalen und elektrischer Energie für ein Ultraschallmesssystem mit dreh- oder schwenkbaren Wandlerelementen umfasst ein Gehäuse (31) und eine Welle (32), die gegenüber dem Gehäuse dreh- oder schwenkbar angeordnet ist. Die Vorrichtung umfasst zusätzlich zwei Spulen (36.1, 36.2) sowie zwei Hälften (35.1, 35.2) eines Schalenkernes (35), wobei die eine Spule (36.1) am Gehäuse (31) befestigt ist, und die andere Spule (36.2) an der Welle (32), und wobei die zwei Spulen (36.1, 36.2) und die zwei Schalenkernhälften (35.1, 35.2) zusammen einen induktiven Übertrager bilden.

## Beschreibung

Die Erfindung betrifft eine Vorrichtung zur Übertragung von elektrischen Signalen und/oder elektrischer Energie für ein System mit einer oder mehreren dreh- oder schwenkbaren Komponenten gemäss Oberbegriff von Anspruch 1, die Verwendung einer derartigen Vorrichtung sowie ein System mit einer derartigen Vorrichtung.

In einem System mit einer oder mehreren dreh- oder schwenkbaren Komponenten, insbesondere in einem Ultraschallmesssystem mit dreh- oder schwenkbaren Wandlerelementen wie es z.B. in Dokument EP 0 926 491 A1 beschrieben ist, besteht das Problem, dass elektrische Signale zwischen einer oder mehreren üblicherweise ortsfesten Komponenten, im genannten Beispiel der Steuer- und Versorgungseinrichtung und der Datenverarbeitungseinheit, und den dreh- oder schwenkbaren Komponenten, im genannten Beispiel den Wandlerelementen, übermittelt werden müssen. Im Dokument EP 0 926 491 A1 wird erwähnt, dass die Übertragung der Signale beispielsweise über Schleifkontakte wie Schleifringe oder andere geeignete Kommunikationsmittel, z.B. kontaktlose Koppler wie optoelektronische, elektromagnetische oder induktive Koppler, erfolgen kann. Die erwähnten Möglichkeiten der Signalübertragung sind jedoch teilweise mit erheblichen Nachteilen verbunden. Beispielsweise ist bei der Verwendung von Schleifringen die mögliche Drehzahl beziehungsweise Schwenkfrequenz wegen der bei höheren Drehzahlen beziehungsweise Schwenkfrequenzen entstehenden Erwärmung und Abnützung beschränkt. Weiter stört bei der Übertragung schwacher Signale, wie beispielsweise unverstärkter Empfangssignale, das Kontaktrauschen der Schleifringe. Ebenfalls negativ ins Gewicht fallen die eher grossen Abmessungen hochwertiger Schleifringe und die teure Herstellung der Präzisionsteile.

Das genannte Dokument offenbart, wie oben ausgeführt, auch kontaktlose Koppler für die Übertragung elektrischer Signale. Leider beschränkt sich die Offenbarung im Wesentlichen auf die Erwähnung des Übertragungsprinzips. Eine Beschreibung oder Darstellung einer konkreten Ausführung eines Kopplers beziehungsweise einer Vorrichtung zur Übertragung von elektrischen Signalen und/oder elektrischer Energie fehlt jedoch im genannten Dokument.

Aufgabe der Erfindung ist es, eine Vorrichtung zur Übertragung von elektrischen Signalen und/oder elektrischer Energie in einem System mit einer oder mehreren dreh- oder schwenkbaren Komponenten zur Verfügung zu stellen, die hohe Drehzahlen beziehungsweise Schwingfrequenzen ermöglicht, berührungslos arbeitet, zumindest was die Signal- und Energieübertrag betrifft, die relativ kompakte Abmessungen aufweist und wirtschaftlich herstellbar ist. Eine weitere Aufgabe der vorliegenden Erfindung ist es, ein Verfahren zur Verfügung zu stellen das die Verwendung einer derartigen Vorrichtung zum Gegenstand hat, sowie ein System mit einer oder mehreren dreh- oder schwenkbaren Komponenten, welches eine derartige Vorrichtung umfasst.

Diese Aufgabe wird erfindungsgemäss durch die in Anspruch 1 definierte Vorrichtung und das in Anspruch 7 definierte Verfahren sowie das in Anspruch 8 definierte System gelöst.

Die erfindungsgemässe Vorrichtung zur Übertragung von elektrischen Signalen und/oder elektrischer Energie für ein System mit einer oder mehreren dreh- oder schwenkbaren Komponenten, beispielsweise für ein Ultraschallmesssystem mit dreh- oder schwenkbaren Wandlerelementen, umfasst zwei gegeneinander dreh- oder schwenkbare Teile, insbesondere ein Gehäuse und eine Welle, die gegenüber dem Gehäuse dreh- oder schwenkbar angeordnet ist. Die Vorrichtung umfasst zusätzlich mindestens zwei elektromagnetische Kopplungselemente, insbesondere Spulen, wobei das eine Kopplungselement am ersten der beiden Teile befestigt ist, und das andere Kopplungselement am zweiten der beiden Teile, und wobei die zwei Kopplungselemente derart angeordnet sind, dass zwischen den Kopplungselementen elektromagnetische Energie übertragbar ist, insbesondere dass Energie induktiv übertragbar ist.

In einer bevorzugten Ausführungsform umfasst die Vorrichtung mehr als zwei elektromagnetische Kopplungselemente, die paarweise angeordnet sind, wobei jeweils das eine Kopplungselement eines Kopplungselementpaares am ersten Teil befestigt ist, und das andere Kopplungselement eines Kopplungselementpaares am zweiten Teil und wobei die Kopplungselemente derart angeordnet sind, dass zwischen den Kopplungselementen eines Kopplungselementpaares elektromagnetische Energie übertragbar ist.

Vorzugsweise umfasst die Vorrichtung zusätzlich mindestens einen magnetischen Kern, insbesondere einen weichmagnetischen Kern wie z.B. ein Kern aus Ferritmaterial, der derart geformt und angeordnet ist, dass die induktive Kopplung zwischen zwei Kopplungselementen eines Kopplungselementpaares verstärkt ist. In einer Ausführungsvariante weist der mindestens eine Kern eine Aussenkontur auf, die als einseitig geschlossener Hohlkörper ausgebildet ist. Vorzugsweise umfasst der mindestens eine Kern einen Innenteil, der massiv oder rohrförmig ausgebildet ist. In einer bevorzugten Ausführungsvariante ist der Innenteil im Innern des Hohlkörpers angeordnet und mit diesem verbunden, wobei der Aussendurchmesser des Innenteils kleiner ist als der Innendurchmesser des Hohlkörpers.

In einer weiteren bevorzugten Ausführungsform umfasst die Vorrichtung pro Kopplungselementpaar einen magnetischen, vorzugsweise weichmagnetischen Kern, insbesondere einen Schalenkern, oder mehrere magnetische, vorzugsweise weichmagnetische Kernteile, insbesondere zwei Hälften eines Schalenkernes, wobei die Kerne oder Kernteile derart geformt und angeordnet sind, dass die induktive Kopplung zwischen den Kopplungselementen eines Kopplungselementpaares verstärkt ist und/oder dass die Kopplung zwischen zwei Kopplungselementen verschiedener Kopplungselementpaare abgeschwächt ist.

Vorzugsweise sind die Kopplungselemente eines Kopplungselementpaares jeweils durch einen Luftspalt voneinander getrennt. Vorzugsweise sind die Kernteile eines Kopplungselementpaares jeweils durch einen Luftspalt voneinander getrennt.

Vorzugsweise sind die Kopplungselemente und/oder die Kerne beziehungsweise Kernteile koaxial bezüglich eines der Teile, insbesondere bezüglich einer Welle, der Vorrichtung angeordnet.

Die Erfindung umfasst auch die Verwendung der erfindungsgemässen Vorrichtung und deren bevorzugten Ausführungsformen in einem System mit einer oder mehreren dreh- oder schwenkbaren Komponenten, insbesondere in einem Ultraschallmesssystem mit dreh- oder schwenkbaren Wandlerelementen.

Weiter umfasst die Erfindung ein System mit einer oder mehreren dreh- oder schwenkbaren Komponenten, insbesondere ein Ultraschallmesssystem mit dreh- oder schwenkbaren Wandlerelementen, und mit einer erfindungsgemässen Vorrichtung zur Übertragung von elektrischen Signalen und/oder elektrischer Energie, insbesondere mit einer der oben beschriebenen Ausführungsformen einer derartigen Vorrichtung.

In einer bevorzugten Ausführungsform umfasst das System eine Messsonde mit dreh- oder schwenkbaren Wandlerelementen und eine erfindungsgemässe Vorrichtung zur Übertragung von elektrischen Signalen und/oder elektrischer Energie, insbesondere eine der oben beschriebenen Ausführungsformen einer derartigen Vorrichtung, sowie eine Welle, vorzugsweise eine flexible Welle, über welche die Wandlerelemente mit der Vorrichtung verbunden sind.

In einer weiteren bevorzugten Ausführungsform umfasst das System eine kombinierte Übertragungs- und Antriebseinheit mit einer erfindungsgemässen Vorrichtung zur Übertragung von elektrischen Signalen und/oder elektrischer Energie, insbesondere mit einer der oben beschriebenen Ausführungsformen einer derartigen Vorrichtung. Die kombinierte Übertragungs- und Antriebseinheit kann auch als eigenständiger Gegenstand aufgefasst werden.

Die erfindungsgemässe Vorrichtung zur Übertragung von elektrischen Signalen und/oder elektrischer Energie hat den Vorteil, dass die Signal- und Energieübertragung abgesehen von der Lagerung der Welle berührungslos und damit verschleissfrei erfolgt. Damit ist eine störungsfreie Signalübertragung auch bei hohen Drehzahlen möglich, beispielsweise bei 1000 U/min. und darüber. Die erfindungsgemässe Vorrichtung eignet sich für bidirektionale Übertragung und verfügt über eine hohe Dynamik. So können z.B. in eine Richtung Sendesignale von 10 W entsprechend 20 V übertragen werden und in Gegenrichtung Empfangssignale von 1 µV. Vorteilhaft ist auch das geringe Rauschen, das bei passiver Übertragung der Signale erzielt wird, und die vergleichsweise hohe Bandbreite der Signalübertragung, welche typischerweise im Bereich von 1 bis 10 MHz liegt. Weitere Vorteile der erfindungsgemässen Vorrichtung sind die relativ kleinen Abmessungen und die Herstellung ohne teure Präzisionsteile.

In einer bevorzugten Ausführungsform umfasst die Vorrichtung zur Übertragung von elektrischen Signalen und/oder elektrischer Energie mehr als zwei Kopplungselemente, beispielsweise 4, 6, 8, 10 oder mehr Kopplungselemente, insbesondere 16 oder 18 Kopplungselemente, die paarweise angeordnet sind, wobei jedes Kopplungselementpaar einen Übertrager bildet. Damit ist es in einfacher Weise möglich, mehrere Kanäle und insbesondere auch Hochfrequenzkanäle parallel zu übertragen.

Weitere vorteilhafte Ausführungsformen gehen aus den abhängigen Ansprüchen und der Zeichnung hervor.

Im Folgenden wird die Erfindung an Hand der Ausführungsbeispiele und an Hand der Zeichnung näher erläutert. Es zeigen:
- Fig. 1: eine Ausführungsform eines Systems mit dreh- oder schwenkbaren Komponenten, in dem eine Vorrichtung gemäss der vorliegenden Erfindung zur Anwendung kommt,
- Fig. 2: einen Längsschnitt durch ein Ausführungsbeispiel einer Vorrichtung gemäss der vorliegenden Erfindung, und
- Fig. 3: eine Schrägansicht eines weiteren Ausführungsbeispiels einer Vorrichtung gemäss vorliegender Erfindung.

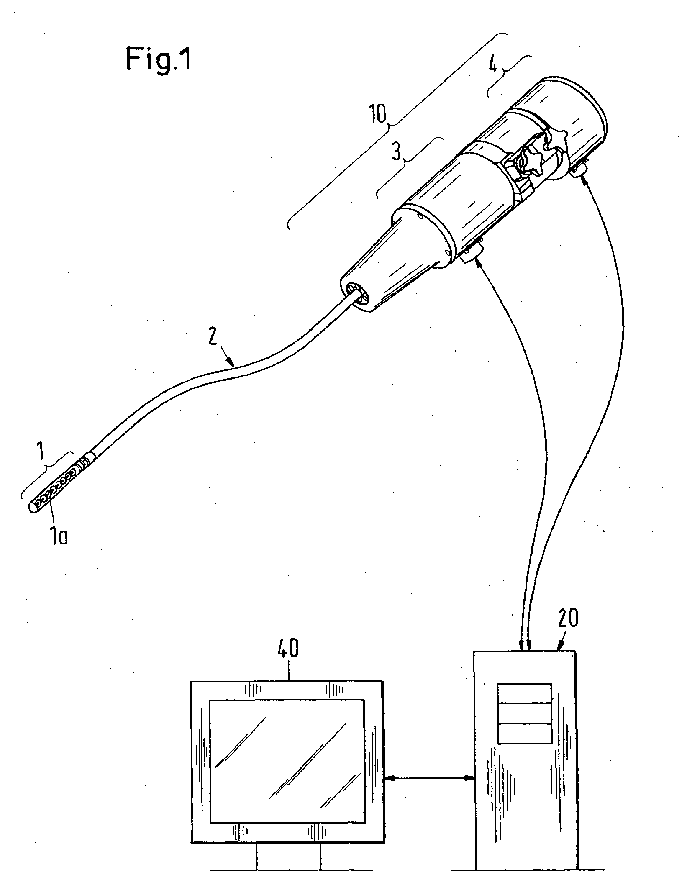

Die in Fig. 1 gezeigte Ausführungsform eines Systems mit dreh- oder schwenkbaren Komponenten ist ein Ultraschallmesssystem, beispielsweise ein bildgebendes Ultraschallmesssystem zur dreidimensionalen Darstellung von Teilen des menschlichen oder tierischen Körpers. Das Ultraschallmesssystem umfasst eine Ultraschallmesssonde 1 mit dreh- oder schwenkbaren Wandlerelementen 1a, eine kombinierte Übertragungs- und Antriebseinheit 10 und eine flexible Welle 2, über welche die Ultraschallmesssonde 1 samt Wandlerelementen 1a mit der Übertragungsund Antriebseinheit 10 verbunden ist. Im vorliegenden Beispiel enthält die Übertragungs- und Antriebseinheit 10 einen Übertragungsteil 3 mit einer Vorrichtung zur Übertragung elektrischer Signale und/oder elektrischer Energie gemäss vorliegender Erfindung und einen Antriebsteil 4 mit einer Antriebsvorrichtung, wie beispielsweise einem Elektromotor, die über die flexible Welle 2 die Dreh- oder Schwenkbewegung der Wandlerelemente 1a antreibt. Die Wandlerelemente 1a sind über elektrische Verbindungsleitungen, die innerhalb der flexiblen Welle 2 angeordnet sind, mit der Vorrichtung zur Übertragung elektrischer Signale und/oder elektrischer Energie, im Folgenden kurz Übertragungsvorrichtung genannt, verbunden, mittels welcher im Betriebszustand elektrische Signale und/oder elektrische Energie zwischen drehenden oder schwenkenden und nicht drehenden oder schwenkenden Komponenten des Systems übertragen werden. Während einer Messung liegt die Drehzahl der Wandlerelemente typisch bei 1000 bis 3000 U/min.

Weiter umfasst das gezeigte Ultraschallmesssystem eine Anzeigeeinheit 40 und eine Steuer-, Versorgungs- und Datenverarbeitungseinheit 20, die sowohl mit der Anzeigeeinheit 40 als auch mit der Übertragungs- und Antriebseinheit 10 beziehungsweise der Übertragungs- und der Antriebsvorrichtung verbunden ist, beispielsweise über Kabel und Steckverbindungen. Im vorliegenden Beispiel dient die Steuer-, Versorgungs- und Datenverarbeitungseinheit 20 dazu, die Antriebsvorrichtung zu steuern, Sendesignale für die Wandlerelemente 1a zur Verfügung zu stellen und die von den Wandlerelementen gelieferten Empfangssignale zu erfassen und derart zu verarbeiten, dass sie über die Anzeigeeinheit 40 als Bild darstellbar sind.

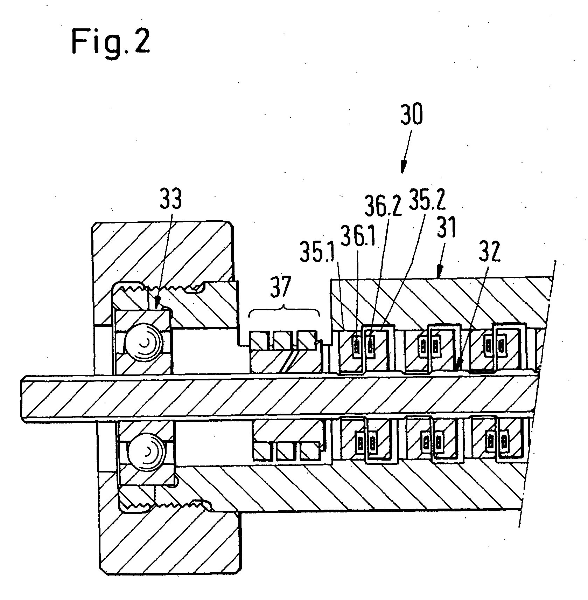

Fig. 2 zeigt einen Längsschnitt eines Ausführungsbeispiels einer Vorrichtung zur Übertragung von elektrischen Signalen und/oder elektrischer Energie gemäss der vorliegenden Erfindung. Die Vorrichtung 30 umfasst ein Gehäuse 31 und eine Welle 32, die mittels eines oder mehrerer Lager 33 dreh- oder schwenkbar im Gehäuse angeordnet ist. Im vorliegenden Ausführungsbeispiel ist das Gehäuse 31 rohrförmig ausgebildet und die Welle 32 konzentrisch im Gehäuse 31 angeordnet. Zusätzlich umfasst die Vorrichtung 30 eines oder mehrere Spulenpaare 36.1, 36.2 und pro Spulenpaar einen Kern oder mehrere Kernteile, vorzugsweise einen Schalenkern, der z.B. aus je zwei zylinderförmigen Hälften 35.1, 35.2 mit ringförmigen Vertiefungen besteht, wobei die Hälften derart angeordnet sind, dass sich die Vertiefungen gegenüberstehen und zwischen den Hälften ein Luftspalt von typisch 0.2 bis 0.5 mm vorhanden ist. Die Schalenkerne beziehungsweise deren Hälften bestehen vorzugsweise aus einem weichmagnetischen Material, beispielsweise einem Ferritmaterial wie z.B. einem MnZn-Ferrit. Im Ausführungsbeispiel ist je eine Spule eines Spulenpaares 36.1, 36.2 in einer der gegenüberstehenden Vertiefungen von zwei Hälften 35.1, 35.2 eines Schalenkernes angeordnet und fest mit der jeweiligen Hälfte verbunden. Die Spulen 36.1, 36.2 bestehen beispielsweise aus einigen wenigen Windungen eines isolierten Kupferdrahtes. Die Hälften sind in axialer Richtung mit je einer Öffnung versehen und konzentrisch auf der Welle 32 angeordnet, wobei die eine Hälfte 35.2 an der Welle 32 befestigt ist und die andere Hälfte 35.1 am Gehäuse 31 und die Welle 32 derart ausgebildet ist, dass sie in der Öffnung der am Gehäuse befestigten Hälfte frei dreh- oder schwenkbar ist.

Die beiden Spulen eines Spulenpaares 36.1, 36.2 bilden zusammen mit den beiden Hälften (35.1, 35.2) eines Schalenkernes einen Hochfrequenzübertrager, mittels welchem hochfrequente Signale und elektrische Energie zwischen der mechanisch mit dem Gehäuse 31 verbundenen Seite 35.1, 36.1 des Hochfrequenzübertragers und der mit der Welle 32 verbundenen Seite 35.2, 36.2 übertragen werden können. Der im vorliegenden Ausführungsbeispiel beschriebene Hochfrequenzübertrager ist breitbandig mit einer typischen Bandbreite von 10 MHz und höher und ermöglicht bidirektionale Übertragung, d.h. es können z.B. sowohl Sendesignale an einen dreh- oder schwenkbaren Wandler übertragen werden als auch Empfangssignale von diesem Wandler. Die beiden Hälften (35.1, 35.2) eines Schalenkernes bilden einen geschlossenen magnetischen Kreis, der geringe Verluste aufweist, und der weitgehend unempfindlich ist gegenüber Streufeldern, insbesondere auch gegenüber Streufeldern benachbarter Übertrager. Als passives Bauelement verfügt der beschriebene Hochfrequenzübertrager über ein geringes Eigenrauschen, was eine hohe Dynamik der übertragenen Signale erlaubt. Vorteilhafterweise werden mehrere Hochfrequenzübertrager der beschriebenen Art neben einander angeordnet, womit in einfacher Weise eine entsprechende Anzahl Hochfrequenzkanäle parallel übertragen werden kann.

In einer Ausführungsvariante umfasst die Vorrichtung 30 zusätzlich zu den Spulenpaaren 36.2, 36.2 und Schalenkernen 35.1, 35.2 einen oder mehrere Schleifringe 37, die auf der Welle 32 angeordnet sind. Mittels der Schleifringe 37 können Hilfsspannungen, wie z.B. Gleichspannungen, und langsam veränderliche Hilfssignale, wie z.B. Spannungen oder Ströme eines Temperatursensors, ohne vorherige Wandlung direkt übertragen werden. Die gleichzeitige Übertragung von hochfrequenten Signalen mittels einer erfindungsgemässen Vorrichtung und von Gleichspannungen und langsam veränderlichen Hilfssignalen mittels Schleifringen ist wirtschaftlich interessant.

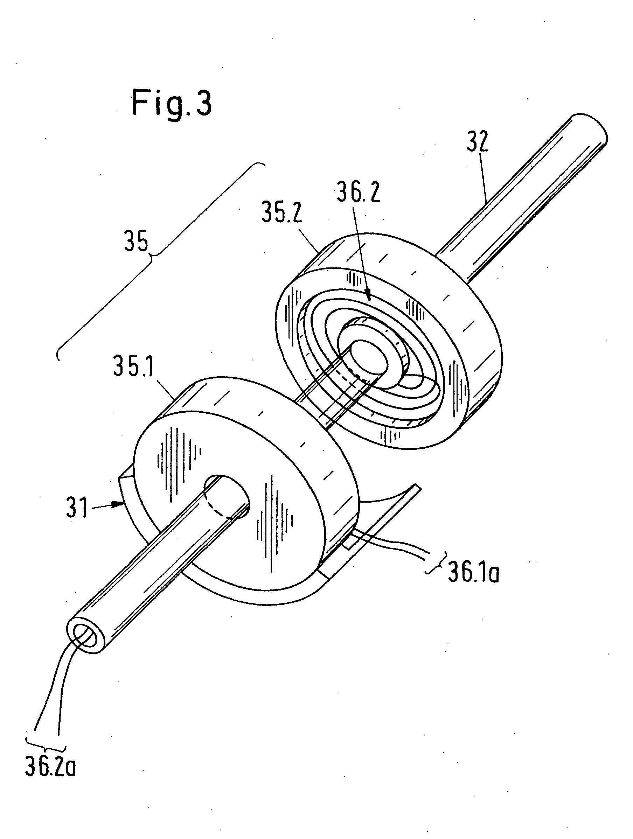

Fig. 3 zeigt ein weiteres Ausführungsbeispiel einer Vorrichtung gemäss vorliegender Erfindung in Schrägansicht. Die Vorrichtung umfasst ein Gehäuse 31, das in Fig. 3 nur schematisch dargestellt ist, und eine Welle 32, die dreh- oder schwenkbar im Gehäuse angeordnet ist. Zusätzlich umfasst die Vorrichtung zwei Spulen 36.1, 36.2, von denen in Fig. 3 nur eine sichtbar ist, und einen Schalenkern 35 mit zwei zylinderförmigen Hälften 35.1, 35.2, die mit je einer ringförmigen Vertiefung versehen sind, wobei in jeder Vertiefung jeweils eine Spule angeordnet und/oder befestigt ist und wobei die Hälften derart angeordnet sind, dass sich die Vertiefungen beziehungsweise Spulen gegenüberstehen. Die Hälften sind in axialer Richtung mit je einer Öffnung versehen und konzentrisch auf der Welle 32 angeordnet, wobei die eine Hälfte 35.2 an der Welle 32 befestigt ist und die andere Hälfte 35.1 am Gehäuse 31 und die Welle 32 beziehungsweise die Öffnung der am Gehäuse befestigten Hälfte 35.1 derart ausgebildet sind, dass die Welle 31 frei drehoder schwenkbar ist. Der Abstand der beiden Hälften ist in Fig. 3 vergrössert, d.h. nicht massstäblich dargestellt, damit die Spule 36.2 in der Vertiefung der mit der Welle verbundenen Hälfte 35.2 sichtbar wird. Der Luftspalt zwischen den Hälften 35.1, 35.2 beträgt typisch 0.1 bis 1 mm. Wie oben stehend beschrieben, bilden die beiden Spulen 36.1, 36.2 zusammen mit den beiden Hälften 35.1, 35.2 des Schalenkernes 35 einen Hochfrequenzübertrager.

In einer bevorzugten Ausführungsvariante sind die Anschlüsse 36.1 a der in Fig. 3 nicht sichtbaren Spule 36.1, welche in der mit dem Gehäuse 31 verbundenen Hälfte 35.1 angeordnet ist, über das Gehäuse nach aussen geführt, während die Anschlüsse 36.2a der Spule 36.2, welche in der mit der Welle verbundenen Hälfte 35.2 befestigt ist, über eine konzentrische Bohrung im Innern der Welle 32 geführt sind. In einer weiteren bevorzugten Ausführungsvariante, die in Fig. 3 nicht dargestellt ist, sind die Anschlüsse 36.2a der Spule 36.2, die in der mit der Welle verbundenen Hälfte befestigt ist, über Nuten in der Welle 32 geführt.

## Patentansprüche

1. Vorrichtung zur Übertragung von elektrischen Signalen und/oder elektrischer Energie für ein System mit einer oder mehreren dreh- oder schwenkbaren Komponenten, insbesondere für ein Ultraschallmesssystem mit dreh- oder schwenkbaren Wandlerelementen (1a), welche Vorrichtung (30) zwei gegeneinander dreh- oder schwenkbare Teile (31, 32) umfasst, insbesondere ein Gehäuse und eine Welle, die gegenüber dem Gehäuse dreh- oder schwenkbar angeordnet ist, **dadurch gekennzeichnet,**
**dass** die Vorrichtung (30) zusätzlich mindestens zwei elektromagnetische Kopplungselemente (36.1. 36.2), insbesondere Spulen umfasst, wobei das eine Kopplungselement (36.1) am ersten der genannten Teile (31, 32) befestigt ist, und das andere Kopplungselement (36.2) am zweiten, und wobei die zwei Kopplungselemente (36.1, 36.2) derart angeordnet sind, dass zwischen den Kopplungselementen elektromagnetische Energie übertragbar ist.

2. Vorrichtung nach Abspruch 1, wobei die Vorrichtung (30) mehr als zwei elektromagnetische Kopplungselemente (36.1, 36.2) umfasst, die paarweise angeordnet sind, wobei jeweils das eine Kopplungselement (36.1) eines Kopplungselementpaares am ersten Teil (31) befestigt ist, und das andere Kopplungselement (36.2) eines Kopplungselementpaares am zweiten Teil (32) und wobei die Kopplungselemente (36.1, 36.2) derart angeordnet sind, dass zwischen den Kopplungselementen eines Kopplungselementpaares elektromagnetische Energie übertragbar ist.

3. Vorrichtung nach einem der Ansprüche 1 oder 2 umfassend zusätzlich mindestens einen magnetischen Kern (35, 35.1, 35.2), insbesondere einen weichmagnetischen Kern aus Ferritmaterial, der derart geformt und angeordnet ist, dass die induktive Kopplung zwischen zwei Kopplungselementen (36.1, 36.2) eines Kopplungselementpaares verstärkt ist.

4. Vorrichtung nach Anspruch 3 umfassend pro Kopplungselementpaar einen magnetischen Kern (35), insbesondere einen weichmagnetischen Schalenkern, oder mehrere magnetische Kernteile (35.1, 35.2), insbesondere zwei Hälften eines weichmagnetischen Schalenkernes, wobei die Kerne oder Kernteile derart geformt und angeordnet sind, dass die induktive Kopplung zwischen zwei Kopplungselementen (36.1, 36.2), die zum selben Kopplungselementpaar gehören, verstärkt ist und/oder dass die Kopplung zwischen zwei Kopplungselementen verschiedener Kopplungselementpaare abgeschwächt ist.

5. Vorrichtung nach einem der vorangehenden Ansprüche, wobei die Kopplungselemente (36.1, 36.2) eines Kopplungselementpaares jeweils durch einen Luftspalt voneinander getrennt sind, und/oder wobei die Kernteile (35.1, 35.2) eines Kopplungselementpaares jeweils durch einen Luftspalt voneinander getrennt sind.

6. Vorrichtung nach einem der vorangehenden Ansprüche, wobei die Kopplungselemente (36.1, 36.2) und/oder die Kerne (35) beziehungsweise Kernteile (35.1, 35.2) koaxial bezüglich eines der Teile (31, 32), insbesondere bezüglich einer Welle, der Vorrichtung (30) angeordnet sind.

7. Verwendung einer Vorrichtung (30) nach einem der Ansprüche 1 bis 6 in einem System mit einer oder mehreren dreh- oder schwenkbaren Komponenten, insbesondere in einem Ultraschallmesssystem mit drehoder schwenkbaren Wandlerelementen (1a).

8. System mit einer oder mehreren dreh- oder schwenkbaren Komponenten, insbesondere ein Ultraschallmesssystem mit dreh- oder schwenkbaren Wandlerelementen (1a), welches System eine Vorrichtung (30) zur Übertragung von elektrischen Signalen und/oder elektrischer Energie nach einem der Ansprüche 1 bis 6 umfasst.

9. System nach Anspruch 8 mit einer Messvorrichtung, welche eine Messsonde (1) mit dreh- oder schwenkbaren Wandlerelementen (1a), eine Welle (2), insbesondere eine flexible Welle, und eine Vorrichtung (30) zur Übertragung von elektrischen Signalen und/oder elektrischer Energie nach einem der Ansprüche 1 bis 6 umfasst.

10. System nach einem der Ansprüche 8 oder 9 umfassend eine kombinierte Übertragungs- und Antriebseinheit (10) mit einer Vorrichtung (30) zur Übertragung von elektrischen Signalen und/oder elektrischer Energie nach einem der Ansprüche 1 bis 6 umfasst.
